(19) Europäisches Patentamt
European Patent Office
Office européen des brevets

(11) Veröffentlichungsnummer: **0 408 998 A1**

(12) # EUROPÄISCHE PATENTANMELDUNG

(21) Anmeldenummer: **90112824.9**

(22) Anmeldetag: **05.07.90**

(51) Int. Cl.5: **C08L 81/02**, C08K 5/20, C08K 5/54

(30) Priorität: **18.07.89 DE 3923658**

(43) Veröffentlichungstag der Anmeldung: **23.01.91 Patentblatt 91/04**

(84) Benannte Vertragsstaaten: **BE DE FR GB IT**

(71) Anmelder: **BAYER AG**

**D-5090 Leverkusen 1 Bayerwerk(DE)**

(72) Erfinder: **Pielartzik, Harald, Dr.**
**Doerperhofstrasse 39**
**D-4150 Krefeld(DE)**
Erfinder: **Köhler, Burkhard, Dr.**
**Mündelheimer Strasse 94**
**D-4150 Krefeld 11(DE)**
Erfinder: **Traenckner, Hans-Joachim, Dr.**
**Leiebos 31, Bus 00111**
**B-2060 Merksem(BE)**
Erfinder: **Jakob, Wolfgang, D. I.**
**Am Domacker 81**
**D-4130 Moers(DE)**
Erfinder: **Bushong, William Craig, Dr.**
**c/o Mobay, Plastics/Bldg. 8**
**Pittsburgh, PA 15205(US)**

(54) **Mischungen aus Polyarylensulfiden, Maleinamidsäuren und Glasfasern.**

(57) Die Erfindung betrifft Mischungen aus Polyarylensulfiden, Glasfasern und Maleinamidsäuren, die sich durch gute mechanische Eigenschaften und eine erhöhte Schmelzviskosität des Grundharzes auszeichnen.

EP 0 408 998 A1

Xerox Copy Centre

## MISCHUNGEN AUS POLYARYLENSULFIDEN, MALEINAMIDSÄUREN UND GLASFASERN

Die Erfindung betrifft Mischungen aus Polyarylensulfiden, Glasfasern und Maleinamidsäuren, die sich durch gute mechanische Eigenschaften und eine erhöhte Schmelzviskosität des Grundharzes auszeichnen.

Polyarylensulfide (PAS) sind bekannt (z.B. US-A 3 354 129, EP-A 171 021). Sie sind inerte, hochtemperaturbeständige Themroplaste, die einen hohen Füllgrad, z.B. mit Glasfasern und/oder anderen anorganischen Füllstoffen erlauben. Der Einsatz dieser Polymeren, insbesondere des Polyphenylensulfids (PPS) nimmt in Bereichen zu, die bisher Duroplasten vorbehalten waren.

PAS hat unbefriedigende mechanische Eigenschaften für einige Anwendungen im Spritzgußbereich. Insbesondere sind Randfaserdehnung und Schlagzähigkeit für die Praxis nicht ausreichend Es hat sich daher als Vorteil erwiesen, PAS z.B. durch Abmischung mit anderen Thermoplasten in den genannten Eigenschaften zu verbessern.

Abmischungen von Polyarylensulfiden mit Polycarbonaten sind bekannt (z.B JP-A 51-59952, EP-A 104 543, US-A 4 021 596).

Für bestimmte Anwendungsgebiete ist das Eigenschaftsprofil derartiger Abmischungen jedoch nicht immer ganz befriedigend.

Ferner ist bekannt, daß PAS sich durch Abmischen mit Maleinimiden in seinen Eigenschaften modifizieren läßt. Meist wird dabei eine Verzweigung von PAS angestrebt, indem entweder PAS unter oxidativen Bedingungen mit Maleinimiden umgesetzt (JP-A 021 876, 3.2.87) oder PAS mit Verbindungen umgesetzt wird, die mindestens drei Maleinimidgruppen und einen Triazinring enthalten (z.B. JP-A 202 162-87, EP-A 105 639). Mischungen aus Polyarylensulfiden und Maleinimiden sind z.B. aus der EP-A 275 001 bekannt.

Maleinimide, besonders solche aus Diaminen, sind oft nur unter Schwierigkeiten synthetisierbar. Wünschenswert wären daher PAS-Modifikatoren, die leicht zugänglich sind und die Schmelzviskosität und/oder die mechanischen Eigenschaften von PAS, vorzugsweise PPS verbessern.

Es wurde nun gefunden, daß Abmischungen von Polyarylensulfiden (PAS) vorzugsweise Polyphenylensulfid (PPS) mit Amidsäuren der Maleinsäure und gegebenenfalls Glasfasern und/oder anderen Zusatzstoffen sich durch ihre mechanischen Eigenschaften und eine erhöhte Schmelzviskosität auszeichnen.

Gegenstand der Erfindung sind daher Mischungen aus

A) 99,9 bis 20 Gew.-%, vorzugsweise

90 bis 20 Gew.-% Polyarylensulfiden, vorzugsweise Polyphenylensulfid,

B) 0,1 bis 40 Gew.-%, vorzugweise 0,5 bis 5 Gew.-% einer Amidsäure der Formel (I) und/oder (II),

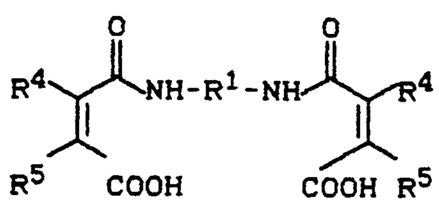

(I)

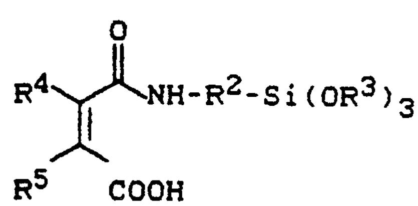

(II)

wobei

$R^1$ ein divalenter Rest, der 1 bis 38 aliphatische Kohlenstoffatome, die auch in cycloaliphatischen Ringen angeordnet sein können, und/oder 6 bis 24 aromatische Kohlenstoffatome, die in 1 bis 4 aromatischen Ringen angeordnet sind, wobei bei zwei oder mehr aromatische Ringe enthaltenden Verbindungen diese durch eine chemische Bindung, ein Sauerstoffatom, ein Schwefelatom, eine Carbonylgruppe oder eine Sulfongruppe verknpüft sein können, enthält, ist,

$R^2$ ein $C_1$-$C_{10}$-Alkylenrest, vorzugsweise ein Propan-1,3-diylrest oder ein Phenylenrest ist,

$R^3$ ein $C_1$-$C_6$-Alkylrest oder ein $C_6$-$C_{14}$-Arylrest ist und

$R^4$ und $R^5$ gleich oder verschieden sein können und Wasserstoff, $C_1$-$C_{22}$-Alkyl, vorzugsweise Methyl, $C_6$-$C_{14}$-Aryl, vorzugsweise Phenyl, besonders bevorzugt Wasserstoff bedeuten,

C) 0 bis 79,9 Gew.-%, vorzugsweise gegebenenfalls 9,9 bis 79,9 Gew.-% Glasfasern und/oder anderen mineralischen oder organischen Füll- und Verstärkungsstoffen und/oder anorganischen oder organischen Hilfsstoffen.

Beispiele für erfindungsgemäße Stoffe der Formel (I) sind Amidsäuren die sich von Maleinsäure und Diaminen ableiten, z.B. aus Maleinsäure und Hexamethylendiamin, m-Phenylendiamin, 2,4- und 2,6-Toloylendiamin, p-Phenylendiamin, 1,4-Diaminocyclohexan, Bis(4-aminophenyl)methan, Ethylendiamin, 4,4′-Diamindiphenylether, 3,3′- und 4,4′-Diaminodiphenylsulfon, 4,4′-Diaminodiphenylsulfid, 4,4′-und 3,3′-Diaminobenzophenon, Benzidin, 3,3′-Dimethylbenzidin, Isophorondiamin, 1,4-Diaminobutan, Bis(4-aminocyclohexyl)methan, 2,2′-Bis-(4-aminophenyl )propan.

Ein Beispiel für erfindungsgemäße Stoffe der Formel (II) ist die Amidsäure der Maleinsäure mit 1-Amino-3-triethoxysilyl-propan.

Die erfindungsgemäß verwendbaren Maleinamidsäuren der Formel (I) und (II) sind bekannt und können analog bekannter Methoden aus Maleinsäure und entsprechenden Aminen hergestellt werden, z.B. nach EP-A 318 162.

Die Maleinamidsäuren der Formeln (I) und (II) können zu den entsprechenden Fumaramidsäuren isomerisieren.

Erfindungsgemäß werden handelsübliche, gegebenenfalls auf übliche Weise geschlichtete Glasfasern eingesetzt. Sie haben einen Durchmesser von 1 bis 20 µm, vorzugsweise von 1 bis 10 µm. Es können auch Endlosglasfasern eingesetzt werden und/oder Herstellungsverfahren gewählt werden, bei denen die Länge der Fasern in der fertigen Abmischung 0,05 bis 10 mm, vorzugsweise 0,1 bis 2 mm, beträgt. Es können auch Endlosfasern (Rovings) eingesetzt werden in Verfahren zur Herstellung von endlosverstärktem Unidirektionalverbund.

Gegebenenfalls können auch - insbesondere teilweise-anstelle der Glasfasern handelsübliche Glaskugeln eingesetzt werden, z.B. Ballotini-Glaskugeln.

Als weitere, mineralische Füllstoffe oder Zusatzstoffe seien Glimmer, Talkum, Quarzmehl, Metalloxide und Sulfide, wie z.B. $TiO_2$, ZnO, ZnS, Graphit, Ruß, Fasern, z.B. aus Quarz oder Kohlenstoff, Carbonate wie z.B. $MgCO_3$, $CaCO_3$, oder Sulfat wie z.B. $CaSO_4$, $BaSO_4$, genannt.

Als weitere übliche Zusatzstoffe können Pigmente, Entformungsmittel, E-Wachse, Fließhilfsmittel, Nucleirungsmittel oder Stabilisatoren eingesetzt werden.

Die erfindungsgemäßen Mischungen können auf übliche Art und Weise durch Extrusion hergestellt werden.

Die erfindungsgemäßen Mischungen können auf übliche Weise zu Formteilen, Halbzeug, Fasern, Folien, Profilen usw. verarabeitet werden. die erfindungsgemäßen Mischungen können generell in vorteilhafter Weise dort eingesetzt werden, wo thermoplastisch verarbeitbare Massen eingesetzt werden.

## Ansprüche

1. Mischungen aus

A) 99,9 bis 20 Gew.-%, vorzugsweise 90 bis 20 Gew.-% Polyarylensulfiden, vorzugsweise Polyphenylensulfid,

B) 0,1 bis 40 Gew.-%, vorzugweise 0,5 bis 5 Gew.-% einer Amidsäure der Formel (I) und/oder (II),

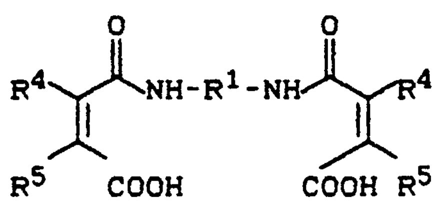

(I)

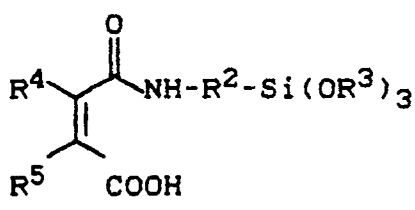

(II)

wobei

$R^1$ ein divalenter Rest, der 1 bis 38 aliphatische Kohlenstoffatome, die auch in cycloaliphatischen Ringen angeordnet sein können, und/oder 6 bis 24 aromatische Kohlenstoffatome, die in 1 bis 4 aromatischen Ringen angeordnet sind, wobei bei zwei oder mehr aromatische Ringe enthaltenden Verbindungen diese durch eine chemische Bindung, ein Sauerstoffatom, ein Schwefelatom, eine Carbonylgruppe oder eine Sulfongruppe verknpüft sein können, enthält, ist,

$R^2$ ein $C_1$-$C_{10}$-Alkylenrest, vorzugsweise ein Propan-1,3-diylrest oder ein Phenylenrest ist,

$R^3$ ein $C_1$-$C_6$-Alkylrest oder ein $C_6$-$C_{14}$-Arylrest ist und

$R^4$ und $R^5$ gleich oder verschieden sein können und Wasserstoff, $C_1$-$C_{22}$-Alkyl, vorzugsweise Methyl, $C_6$-$C_{14}$-Aryl, vorzugsweise Phenyl, besonders bevorzugt Wasserstoff bedeuten,

C) 0 bis 79,9 Gew.-%, vorzugsweise gegebenenfalls 9,9 bis 79,9 Gew.-% Glasfasern und/oder anderen mineralischen oder organischen Füll- und Verstärkungsstoffen und/oder anorganischen oder organischen Hilfsstoffen.

2. Verwendung von Mischungen gemäß Anspruch 1 zur Herstellung geformter Körper.

Europäisches Patentamt

# EUROPÄISCHER RECHERCHENBERICHT

Nummer der Anmeldung

**EP 90 11 2824**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | WPIL, FILE SUPPLIER, AN=89-160451, Derwent Publications Ltd, London, GB; & JP-A-1 101 366 (TORAY IND.) 19-04-1989 | | C 08 L 81/02<br>C 08 K 5/20<br>C 08 K 5/54 |
| A | WPIL, FILE SUPPLIER, AN=89-203151, Derwent Publications Ltd, London, GB; & JP-A-1 141 949 (MITSUI TOATSU) 02-06-1989 | | |
| A | EP-A-0 330 488 (HOECHST CELANESE) | | |
| A | PATENT ABSTRACTS OF JAPAN, Band 12, Nr. 496 (C-555)[3343], 23. Dezember 1988; & JP-A-63 205 357 (DAINIPPON K.K.) 24-08-1988 | | |
| | | | **RECHERCHIERTE SACHGEBIETE (Int. Cl.5)** |
| | | | C 08 K |

Der vorliegende Recherchenbericht wurde für alle Patentansprüche erstellt

| Recherchenort | Abschlußdatum der Recherche | Prüfer |
|---|---|---|
| Den Haag | 05 Oktober 90 | KLIER E.K. |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument